# EUROPEAN PATENT APPLICATION

(11) **EP 1 344 962 A1**
(43) Date of publication of application: **17.09.2003**
(21) Application number: 02027917.0
(22) Date of filing: 13.12.2002
(51) Int. Cl.: F16H 55/14

(54) **Gear wheel**

(30) Priority: 15.03.2002 IT TO20020231
(71) Applicant: DENSO THERMAL SYSTEMS S.p.A., 10046 Poirino (Torino) (IT)
(72) Inventor: Borghi, Antonello, 10092 Beinasco, (Torino) (IT)
(74) Representative: Marchitelli, Mauro

(57) **Abstract**

The gear wheel (W) comprises a hub (1), to which there is connected a peripheral element (2), which is provided with a toothing (3) and which extends for at least an arc of circumference of a circle that is substantially concentric with the hub (1). The toothed peripheral element (2) is connected to the hub (1) by means of a plurality of elastic members (5), which tend to push said toothed peripheral element (2) radially away from the hub (1) and are designed to enable a limited displacement of the toothed element (2) with respect to the hub (1).

## Description

The present invention relates to a gear wheel comprising, in a way in itself known, a hub, to which there is connected a peripheral element, which is provided with a toothing and which extends for at least an arc of circumference of a circle that is substantially concentric with the hub.

Gear wheels of this sort are extensively used in gears or gearing.

A problem which afflicts gears and gearing is represented by the tolerances involved in their fabrication and assembly, which are liable to give rise to unpleasant sensations of "hysteresis" experienced by the user who is manually operating a mechanism of this kind.

The above tolerances are moreover the cause of troublesome operating noise.

In order to overcome the above drawbacks, the use has been proposed of gear wheels comprising a hub, to which there is connected a flexible toothed peripheral element, frequently referred to as "leaf spring", which extends for an arc of circumference of a circle or circular segment and which is constrained to the hub at its ends. The intrinsic flexibility and elasticity of said toothed element or segment can enable at least partial recovery of the aforesaid tolerances.

A purpose of the present invention is to provide a new improved solution to the problem outlined above of the recovery of tolerances in a gear or gearing.

The above and other purposes are achieved, according to the invention, with a gear wheel of the type specified above, characterized in that the toothed peripheral element is connected to the hub by means of a plurality of elastic members, which tend to push said toothed peripheral element radially away from the hub and are designed to enable a limited displacement of the toothed element with respect to the hub.

Further characteristics and advantages of the invention will emerge clearly from the ensuing detailed description, provided purely by way of non-limiting example with reference to the attached drawings, in which:
- Figure 1 is a partial side view of a gear comprising a gear wheel according to the present invention; and
- Figures 2 and 3 are cross-sectional views according to the line II-II and the line III-III, respectively, of Figure 1.

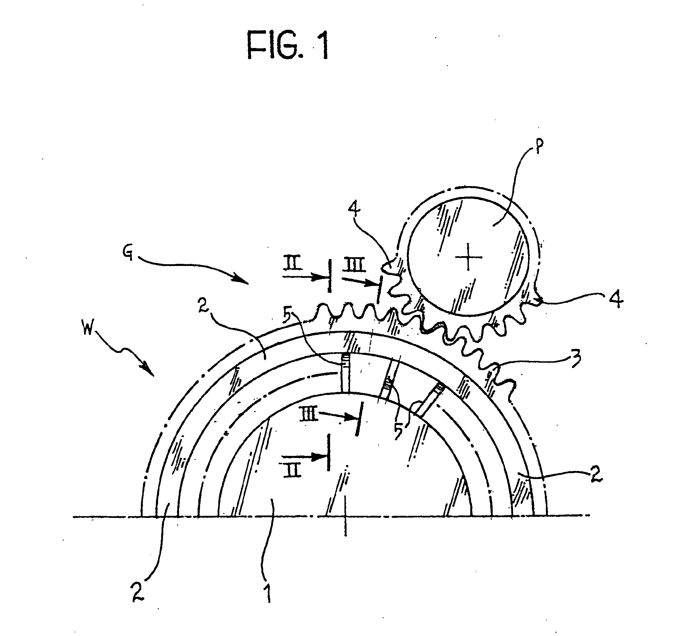

In Figure 1, the reference G designates, as a whole, a gear. In the example of embodiment illustrated, the gear G comprises a sprocket or pinion P, which meshes with a gear wheel according to the invention, designated as a whole by W.

The gear wheel W comprises a hub 1, to which there is connected a peripheral element 2 provided with a toothing 3.

In the example of embodiment illustrated, the element 2 is a ring gear, which surrounds the hub 1. In general the toothed element 2 could, on the other hand, have a smaller angular extension and consist, in practice, simply of the segment of a circle.

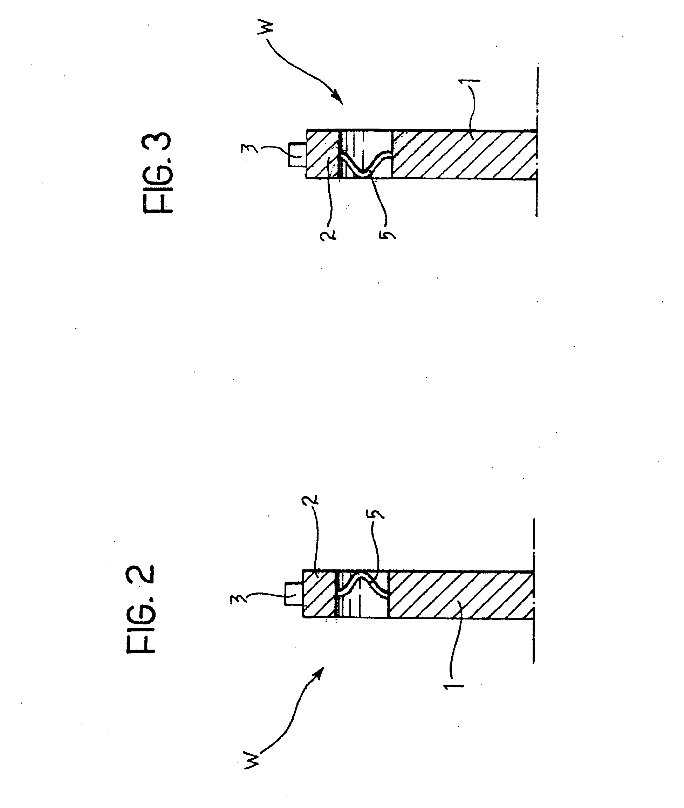

The toothing 3 of the toothed element 2 meshes with a corresponding toothing 4 of the sprocket or pinion P (see Figure 3).

The toothed peripheral element 2 is connected to the hub 1 by means of a plurality of elastic members 5, for example, having the form of arched straps, which tend to push said toothed peripheral element 2 radially away from the hub 1.

The elastic members 5 in effect enable a displacement of the peripheral toothed element 2 with respect to the hub 1.

The aforesaid elastic connecting members 5 are preferably arched alternately on opposite sides with respect to a plane orthogonal to the axis of the hub, as appears clearly from a comparison between Figures 2 and 3. The said solution makes it possible to ensure a relative displacement of the toothed element 2 with respect to the hub 1 essentially in the same general plane of the hub.

The gear wheel W described above can conveniently be made, for example, of a moulded plastic material, even though in principle the use of other materials is not ruled out.

Of course, without prejudice to the principle of the invention, the details of construction and the embodiments may vary widely with respect to what is described and illustrated herein purely by way of non-limiting example, without thereby departing from the scope of the present invention as defined in the annexed claims.

## Claims

1. A gear wheel (W) for use in a gear (G), comprising a hub (1), to which there is connected a peripheral element (2), which is provided with a toothing (3) and which extends for at least an arc of circumference of a circle that is substantially concentric with the hub (1),
**characterized in that** the toothed peripheral element (2) is connected to the hub (1) by means of a plurality of elastic members (5), which tend to push said toothed peripheral element (2) radially away from the hub (1) and are designed to enable a limited displacement of the toothed element (2) with respect to the hub (1).

2. The gear wheel according to Claim 1, in which said elastic connecting members (5) are basically radial straps, preferably arched alternately on opposite sides with respect to a plane orthogonal to the axis of the hub (1).

3. The gear wheel according to Claim 1 or Claim 2, in which said toothed element (2) is a circumferential gear wheel, which surrounds the hub 1.

4. A gear (G) comprising a plurality of gear wheels (P, W), at least one of which (W) is of the type according to any one of the foregoing claims.

The foregoing substantially as described and illustrated and for the purposes herein specified.
